# DEMANDE DE BREVET EUROPEEN

(11) **EP 1 338 578 A1**
(43) Date de publication de la demande: **27.08.2003**
(21) Numéro de dépôt: 02447149.2
(22) Date de dépôt: 30.07.2002
(51) Int. Cl.: C04B 28/10

(54) **Système de construction avec bétons légers multi-fonctionnels et multi-usages**

(30) Priorité: 09.01.2002 EP 02447001
(71) Demandeur: Teleman, Petrache, 1190 Bruxelles (BE)
(72) Inventeur: Teleman, Petrache, 1190 Bruxelles (BE)

(57) **Abrégé**

Bétons légers multi-fonctionnels et multi-usages obtenus par le mélange,en des proportions variables,entre 2 liants le ciment Portland gris ou blanc et la chaux vive éteinte ainsi que deux aggregats naturels légers (de base)
que sont les granulés d'argile expansée au four et les granulés de liège non-torréfiés.Les bétons légers dont l'objet la présente invention ont des résistances caractéristiques en comprésion comprises entre 5 à 15MPa et plus,sont plastiques,denses,perméables à l'air,isolants thérmiques, acoustiques, résistants au feu, parasismiques et ont un poids spécifique compris entre 600 à 1000kg/m3, peuvent être cloués vissés,sciés et boulonnés sans chevillage,peuvent être préfabriqués et/ou fabriqués sur place,sont exempts de ségrégation lors de la mise en oeuvre et peuvent être pompés sur chantier. Servent aussi à la protéction des structures métalliques contre le feu par application humide et/ou seche, sont certifiables comme matériaux bio-construction. Leur plasticité permet l'utilisation comme bétons architectoniques Les bétons légers de la presente invention comportent 3 (trois) classes de produits S (strong), M (médium), L(light) qui couvrent pratiquement la totalité des éléments porteurs et non-porteurs qui constituent le gros-oeuvre d'un bâtiment. Les bétons légers dont objet la présente invention sont destinés à la construction neuve et/ou en rennovation,pour tout édifice (logements, bureaux, ecoles, hôpitaux e.a., à l'exception des ouvrages d'art (ponts,tunnels,viaducs) et des ouvrages exécutés en milieu agréssif.

## Description

### Domaine téchnique auquel l'invention se rapporte:

La présente invention se rapporte au domaine des constructions courantes residentielles et/ou non-résidentielles telles que maisons individuelles et/ou ensembles de logements, constructions de bureaux,hôpitaux,écoles,salles de spéctacles et autres,la liste étant non-limitative.

### Etat de la téchnique dans le domaine auquel l'invention se rapporte:

Dans l'état actuel de la téchnique des bétons,on distingue plusieurs groupes de produits:
**A)Bétons courants**,confectionnés avec des ciments Portland composés ou non,du sable et du gravier,auquel on ajoute, suivant les cas,des adjuvants qui corrigent certaines caractéristiques de ces bétons:temps de prise,plastifiants pour la mise en oeuvre,produits pour l'imperméabilité à l'air et/ou à l'eau,pour la résistance aux agréssions chimiques e.a.
   Ces bétons ont une résistance caractéristique en compression comprise entre 25 et 45,voir 50MPa.
   La principale fonction de ces bétons est celle de résistance en compression,en vue de la conféction des éléments porteurs d'un bâtiment.
   La dernière décenie a vu l'emergeance des bétons de très hautes performances **(BFUP)**.
   Ces bétons peuvent avoir des résistances caractéristiques en compression comprises entre 60 et 200MPa,tandis qu'en traction on peut atteindre des valeurs de 40MPa.
   C'est surtout l'utilisation des fumées de silice qui permet l'obtention de ces performances élèvées.
   Avec ces hautes performances mécaniques,le poids propre des éléments porteurs d'une construction peut être fortement réduit.
   Pour cette raison,ces bétons trouvent une application par excellence dans la construction des ouvrages d'art de grande envergure,tels que ponts,viaducs,tunnels e.a.
**B)** A l'autre extrème de l'échelle des résistances caracteristiques en compression on trouve la catégorie des bétons légers et en premier lieu,les bétons cellulaires autoclavés
   Ces bétons sont confectionnés en usine,en ajoutant au ciment et au sable,de la poudre d'aluminium ou bien,de l'eau savonneuse ce qui produit des bulles de gaz.
   Ces bétons ont une résistance caractéristique en compression comprise entre 1.5 et 2.5MPa et un bon pouvoir d'isolation thérmique du a leur grande porosité.
   Ces bétons sont très friables et les endommagements produits lors du transport et/ou lors de la mise en oeuvre sont rélativement importants.
   Leur porosité les rend sensibles à l'humidité de qui reduit la capacité d'isolation thérmique.

Pour ces raisons,les bétons cellulaires trouvent application pour la réalisation des maçonneries portantes et/ou non portantes dans des bâtiments avec rez-de-chaussée et maximum 2 étages ou alors,pour la réalisation des bardages des bâtiments indistriels.

Leur manque de densité et la faible capacité de résistance en compréssion,fait que leur utilisation pour réaliser des dalles est assez restrainte.

Depuis les années 70,on utilise dans la construction des bétons légers confectionnés avec du sable,ciment et en y ajoutant des agrégats légers tels que l'argile expansée au four,des granulés de vermiculite,polystyrène expansé ou de la sciure de bois et autres.

Le grand problème de ces bétons légers est leur très faible plasticité,ce qui provoque des ségrégations lors de leur mise en place sur le chantier.Ainsi,le pompage en hauteur est quasi impossible,tandis que l'utilisation des vibreurs provoque des ségrégations.

Compte-tenu de ceci,l'utilisation des béton légers frais à base d'argile expansée au four et/ou a base de vermiculite et/ou a base de polystyrène expansé pose aux constructeurs le dilème suivant:
Si l'on ajoute une quantité d'eau de gâchage plus grande, il y aura ségrégation et une grande porosité.
Si par contre,on réduit au maximum la quantité d'eau de gâchage,la mise en oeuvre de ces bétons sera difficile et le fait de les vibrer créera des ségrégations.

C'est pour ces raisons que les applications avec du béton frais sur le chantier se limitent souvent à des dalles de sol isolantes,des amenagements des abords,des chapes isolantes et/ou de pente en toitures/terrasses et autres. Les bétons légers à base d 'argile expansée au four,sont les plus utilisés.Ces bétons ont une résistance caracteristique en compression à 28j (fc28) comprise entre 2MPa et 5.5MPa et même plus,en fonction de la composition adoptée et offrent une bonne capacité d'isolation thérmique

Ils trouvent des applications dans les maçonneries portantes ou non portantes,surtout à l'intérieur des bâtiments.

Néanmoins,les blocs de maçonnerie confectionnés a base de béton d'argile expansée au four,sont rélativement poreux donc sensibles à l'humidité.

Les bétons cellulaires sont sciables,mais les fixations mécaniques diréctes (vissage,clouage) sont impossibles,vu leur grande friabilité.Il est de même pour les bétons légers à base d'argile expansée et/ou vermiculite et/ou polystyrène dans lesquels les fixations mécaniques se font par chevillage uniquement.
En conclusion,on peut dire qu'à l'état actuel de la téchnique des bétons légers,leur aire d'utilisatio dans les bâtiments est restrainte à cause de leur capacité de résistance en compression assez faible,tandis que la fonction d'isolation thérmique est amoindrie en présence de l'humidité,vu leur porosité.Il en est de même,en ce que concerne le domaine des fixations mécaniques par vissage et clouage ou,il faut utiliser des moyens couteux (chevillage).

La présente invention concerne les bétons légers,pour lesquels l'auteur a cherché a améliorer toutes les performances,à palier a leurs inconvenients et a les rendre polyvalents,de sorte qu'ils puissent trouver application dans tous les éléments de construction constituant le gros-oeuvre.

### Objet et déscription du brévet d'invention:

La présente invention concene des bétons légers manufacturés en usine et/ou confectionés sur les chantiers, multi-fonctionnels et multi-usages,réalisés à base de 2 liants qui sont le ciment Portland et la chaux vive eteinte et 2 aggrégats naturels à savoir l'argile expansée au four et le liège en granulés non-torrefiées,en ce que ces bétons légers ont une résistance caractéristique en compression à 28j (fc28) comprise entre 5 à 15MPa et plus et un poids spécifique compris entre 650 à 1000kg/m³,en ce que aussi,on peut ajouter,suivant les necéssités,des adjuvants compatibles avec les 2 liants,pour renforcer les caractéristiques physico-mécaniques des bétons dont l'objet la présente invention,en ce que aussi,le caractère multi-fonctionnel et multi-usages du produit dont objet la présente invention,s'obtient par des mélanges en des proportions différentes des matériaux de base:le ciment Portland (blanc ou gris),la chaux vive éteinte (Ca(OH)2, ou de la chaux hydratée en poudre, de l'argile expansée au four et les granulés de liège non-torréfiés.
Dans les bétons légers qui font l'objet de la présente invention,le ciment POrtland (gris ou blanc) joue le rôle du liant qui procure les caractéristiques mécaniques de résistance,tandis que le deuxième liant qui rentre dans la composition des bétons légers définis par la présente invention,à savoir la chaux-vive éteinte-la pâte de chaux-joue principalément le rôle de super-plastifiant,empêchant toute ségrégation des agrégats légers qui sont les granulés d'argile expansée au four et les granulés de liège non-torrefiés reduissant ainsi et par conséquence,la quantité necéssaire d'eau de gâchage,en permettant donc,la conféction des bétons légers ayant des faibles deformations résultant du rétrait du béton frais,en même temps que permettant ainsi,une mise en place extrêmement façile, nottament par le pompage des bétons dont objet la présente invention,en ce que aussi,le liant que represente la chaux vive éteinte est aussi un facteur augmentant à la fois aussi bien la capacité de résistance au feu de ces bétons que les capacités d'isolation thérmique et acoustique, ainsi que l'impérméabilité à l'air des bétons faisant objet de la présente invention,en ce que si l'on remplace la chaux vive-éteinte par de la chaux hydratée en poudre, on perd ainsi la capacité de liant mécanique, mais on conserve la capacité de super-plastifiant de celle-ci.
Les 2 autres composants de base des bétons légers faisant l'objet de la présente invention,sont légers,imputrescibles incombustibles,ont des excellentes qualités d'isolants acoustiques et thérmiques.
Les granulés d'argile expansée au four ont des dimensions variant entre 4 et 16mm et jouent le rôle du gravier,tandis que les granulés de liège non-torréfiés ont le même rôle dans les bétons légers de la présente invention,que le sable dans les bétons lourds.
En ce qu,ainsi définis,les bétons légers dont l'objet la présente invention,permettent de construire des bâtiments ayant un poids propre reduit en proportion de 2 à 3 fois par rapport aux constructions réalisées avec des bétons lourds.
La multi-fonctionalité des bétons légers dont l'objet la présente invention,consiste en la conjonction simultannée,mais à des degrés variables,suivant les rapports entre la quantité et la qualité du ciment Portland et la quantité et l'âge de la chaux-vive éteinte d'une part et le rapport entre la quantité de granulés d'argile expansée au four et la quantité de granulés de liège non-torrefiés,en ce que,plus on augmente la quantité de ciment par rapport à la quantité de chaux-vive éteinte,on obtient des résistances en compréssion plus élèvées (fc28),ainsi que plus on augmente la quantité de granulés d'argile expansée au four par rapport à la quantité de granulés de liège non-torréfiés,plus on augmente aussi la résistance en compréssion des bétons dont l'objet la présente invention tandis que plus on augmente la quantité de chaux-vive éteinte par rapport à la quantité de ciment Portland,plus on augmente la plasticité et les caractéristiques d'isolation acoustique,thérmique et pérmeabilité à l'air,de même qu'on obtient des effets allant dans le même sens,en augmentant la quantité de granulés de liège non-torrefiés par rapport à la quantité de granulés d'argile expansée au four, en ce sens que la chaux-vive éteinte est a la liant mécanique et super plastifiant, tandis que la chaux hydratée en poudre n'est que superplastifiant.
Ainsi,les bétons légers dont objet la présente invention ont des fonctions multiples et simultannées tels que:
a)fonction de résistance en compression à 28j.permettant
le réalisation de pratiquement tous les éléments de construction faisant partie de la structure portante des bâtiments tels que colonnes,voiles,poutres,dalles,murs en blocs.
b)fonction d'isolation acoustique.
c)fonction d'isolation thérmique.
d)fonction de protéction au feu des structures en béton lourds et/ou en acier.
e)fonction parasismique,par la diminution du poids propre du bâtiment et de dissipation de l'énergie sismique par la présence des granulés de liège dans la composition des bétons légers faisant l'objet de la présente invention.
f)fonction de composant du gros-oeuvre d'un bâtiment conçu pour avoir la certification bio-construction,en ce sens que les 4 composants de base, à savoir,le ciment Portland,la chaux-vive éteinte,l'argile expansée au four et le liège en granulés sont des matériaux exempts de toute toxicité et que la présence de la chaux-vive éteinte augmente la permeabilité à l'air des éléments utilisant ces bétons légers, la chaux hydratée en poudre ayant le même effet.

Le caractère multi-usages des bétons légers dont l'objet la présente invention,resulte du concept de réaliser en usine et/ou sur le chantier,par des mélanges en des proportions bien définies entre les composants de base des bétons légers dont objet la présente invention,à savoir le ciment Portland,la chaux-vive éteinte,l'argile expansée au four et le liège en granulés non-torrefiés,en ce qu'on obtient 3 classes de produits en bétons légers qui couvrent pratiquement tous les éléments de construction rélatives au gros-oeuvre d'un bâtiment à l'exception des fondations en ce sens que,les 3 classes pré-citées se réfèrent au fait de donner priorité à l'un de critères suivants:
a)la priorité à la résistance en compréssion,donne la classe S (Strong)
b) l'équilibre entre la capacité de résistance en compression et les qualités d'isolation thérmiques et phoniques, donne la classe de produits M (Médium).
c)la priorité acordée aux caractéristiques d'isolation acoustique et/ou thérmique,donne la classe L (Light). Tout ceci en ce que le terme "classe S" se réfère à la la catégorie de bétons légers dont l'objet la présente invention,qui seront utilisés pour réaliser des éléments de stabilité des bâtiments,tels que colonnes,poutres,dalles murs en blocs et voiles coulées sur place et/ou préfabriqués fortement chargés,tandis que la "classe M" se réfère à la catégorie de bétons légers dont objet la présente invention,servant a conféctionner des éléments de construction tant porteurs mais moins chargés,qu'isolants acoustiques et/ou thérmiques en ce que aussi,le terme de "classe L" se réfère à des éléments confectionnés avec des rapports entre les composants de base de la présente invention,à savoir le ciment Portland,la chaux-vive éteinte les granulés d'argile expansée au four et les granulés de liège non-torrefiés,tels que permettant de confectionner en usine et/ou sur place,des éléments de construction non-porteurs,à savoir,cloisons et murs de séparation,coupe-feu ou non,plaques et panneaux isolants de toiture et/ou à l'intérieur des bâtiments,en ce que donc,le terme multi-usage signifie le fait qu'il est possible de réaliser,en utilisant les bétons légers dont objet la présente invention:
   - des murs porteurs,extérieurs et/ou intérieurs au bâtiment
   - des dalles pleines et/ou allégées,sur prédalles et/ou coulées sur place,des hourdis préfabriqués.
   - des dalles et des planchers en structure mixte acier-béton léger avec,suivant les calculs de stabilité,soit de la chaux-vive éteinte,soit de la chaux hydraulique en poudre.
   - des voiles préfabriquées et/ou coulées sur place et encore,en système en "pré-murs".
   - des colonnes préfabriquées et/ou coulées sur place.
   - des poutres préfabriquées et/ou coulées sur place.
   - des éléments architectoniques de façade et/ou intérieurs pouvant être coloriés dans la masse ou non coloriés. des cloisons non-portantes de séparation des locaux,ayant des caractéristiques d'isolation thérmique et/ou acoustique suivant les préscriptions téchniques des projets.
   - la protection contre le feu des structures en acier,soit par remplissage (dans des tubes ronds et/ou carrés et/ou réctangulaires),soit par application à l'extérieur sous forme humide et/ou sèche (panneaux).
   - paneaux de toiture armés et auto-portants.
   - éléments de couverture sous la forme de plaques et/ou panneaux entre des éléments porteurs du toit,fixés par clouage,vissage et/ou boulonnage.

En ce que aussi,le terme "multi-usage" se réfère au fait que les bétons légers dont objet la présente invention, obtenus par des compositions variables mais bien définies entre les composants de base dont se réfère la présente invention,à savoir,le ciment Portland,la chaux-vive éteinte les granulés d'argile expansés au four et les granulés de liège non-torrefiés,peuvent être cloués,vissés,boulonnés et/ou sciés.

En ce que aussi,le terme "multi-usages"pour les bétons légers dont fait objet la présente invention,se réfère au fait que ces bétons peuvent être utilisés dans pratiquement toute construction neuve et/ou à rennover,compte-tenu de leurs caractéristiques multi-fonctionnelles,ainsi que du fait que le poids spécifique des bétons dont objet la présente invention soit compris entre 650 et 1000kg/m3 suivant les compositions,ce qui reduit considerablement les frais de transport des éléments préfabriqués à base de bétons légers dont objet la présente invention,par rapport aux bétons "lourds",en ce que donc aussi,du fait du faible poids spécifique des bétons dont l'objet la présente invention,il est possible de reduire les dimensions des fondations des bâtiments à construire,ou bien, de pouvoir fonder les bâtiments,plus facilement sur des sols de fondation de faible capacité portante. Les bétons dont objet la présente invention,étant **multifonctionnels et multi-usages** dans le sens aussi,en ce que concerne la possibilité d'ajouter aux agrégats de base que sont les granulés d'argile expansé au four et les granulés de liège non-torrefiés,d'autres agrégats naturels comme la sciure de bois,l'argile,ou bien artificiels comme les granulés de polystyrène expansé,en ce sens que l'utilisation simultannée de 2 liants qui,par la synergie crée entre la fonction de liants et de super-plastifiants,l'utilisation dans les bétons légers de plusieurs agrégats légers est rendue possible par la facilité exceptionnelle de mise en place de ces bétons, conjuguée avec la diminution de la quantité d'eau de gâchage en ce que ceci permet l'obtention de bétons à la fois légers,denses,plastiques,avec des bonnes résistances caractéristiques en compression et traction,des bétons ayant des faibles déformations dues au retrait du béton frais,les déformations dues au fluage des bétons légers dont l'objet la présente invention étant favorablement influencées par le faible poids volumetrique et la trés bonne densité de ceux-ci.

### Déscription de composition des bétons légers faisant l'objet de la présente invention:

Les bétons légers avec les 2 liants que sont le ciment Portland gris ou blanc,et la chaux-vive éteinte et les 2 agrégats naturels de base que sont les granulés d'argile expansée au four et les granulés de liège non-torrefiés, peuvent se décliner en une multitude de variantes,le choix se faisant en fonction du résultat qu'on veut obtenir,en ce sens que l'auteur de la présente invention classifie ces innombrables possibilitées de melange,suivant 3 classes de produits,décrites plus haut (classes S,M,L).
Ainsi,une composition moyenne,non exhaustive et servant de base à la mise au point de toute une série de composants à l'intérieur de chaque classe de bétons légers faisant l'objet de la présente invention,est donnée ci-après, en sachant aussi,que le remplacement dans la composition des béton légers faisant 1(objet de la présente invention, de la chaux-vive éteinte,par de la chaux hydratée en poudre confère a celle-ci uniquement un rôle de superplastifiant.

| Béton léger de la classe S ("Strong"): | |
|---|---|
| Ciment Portland | 2.5 volumes |
| Chaux-vive éteinte | 1.0 volume |
| Granulés argile expansée | 3.0 volumes |
| Granulés liège non-torref. | 2.0 volumes. |

| Béton léger de la classe M ("Medium") : | |
|---|---|
| Ciment Portland | 1,75 volumes |
| Chaux-vive éteinte | 1.75 volumes |
| Granulés argile expansée | 3.0 volumes |
| Granulés liège non-torref. | 2.0 volumes |

| Bétons légers de la classe L ("Light") : | |
|---|---|
| Ciment Portland | 1.0 volume |
| Chaux-vive éteinte | 2.5 volumes |
| Granulés argile expansée | 1.5 volumes |
| Granulés liège non-torref. | 3.5 volumes |

En ce que,le remplacement de la chaux-vive par de la chaux hydratée en poudre ne doit se faire que pour les bétons légers de la classe "L"(light) et dans certains cas pour les bétons légers de la classe "M'(médium),mais pas pour les bétons de la classe "S"(strong) pour lesquels,la chaux vive éteinte apporte,en plus,le rôle de liant complementaire au ciment Portland.
En ce que aussi,l'ajoute de la fumée de silice,confère a toutes les classes de bétons de la présente invention un surcroit de capacité de resistance en compression.

### Confection des bétons légers dont l'objet la présente invention:

L'auteur de la présente invention préconise,après avoir effectué des expérimentation,l'ordre suivant des opérations pour confectionner les bétons légers dont l'objet la invention:
A) mélange à sec des granulés d'argile expansée au four et des granulés de liège non-torrefié avec la quantité de ciment Portland prévue pour l'obtention de la qualité du produit desiré,suivant la classe auquelle il appartient, (S,M,L) et l'application spécifique voulue.
B) Réalisation d'une barbotine formée par la quantité de chaux-vive éteinte et une quantité d'eau de gâchage necéssaire pour une prémiere phase de mélange,avec les matières mentionnées sous le point A ci-dessus (ciment, argile expansée et granulés liège non-torrefiés).
C)Malaxage normal et rajoute d'eau de gâchage jusqu'à l'obtention de la consistance voulue.

Contrairement aux pratiques existantes lors du confectionnement des bétons légers a base de sable et granu d'argile expansé au four,pour lesquelles,il est conseillé d'arroser copieusement les granulés d'argile,avant l'introduction du ciment dans le mélange,l'auteur de la présente invention considère que des resultats meilleurs s'obtienent en faisant d'abord un mélange "à sec" du ciment avec les agrégats sus-mentionnés. En ce que aussi,l'ajoute et/ou le remplacement des granulés de liège non-torrefiés par d'autres aggrégats légers comme la vermiculite et/ou la sciure de bois, ne modifie pas le mode de confectionement des bétons légers dontl'objet de la présente invention et que l'ajout dans la compositio de ces bétons de la fumée de silice ne doit se faire que dans le mélange humide des composants.

En ce que aussi,le mode de confectionnement des bétons légers en vue d ela réalisation des structures mixtes acier-béton léger pour les dalles et les planchers des bâtiments se fait de la même manière que pour les autres éléments de construction utilisant les bétons dont l'objet la présente invention

## Revendications

1. Bétons légers conféctionnés avec 2 liants,a savoir le ciment gris ou blanc,et la chaux-vive éteinte et 2 agrégats naturels à savoir l'argile expansée au four,le liège en granulés non-torréfiés,en ce que dans cette composition de base,le ciment Portland confère aux bétons légers dont l'objet la présente invention,les caractéristiques mécaniques de résistance en compression et la chaux vive éteinte en plus de son rôle de liant,confère a ces bétons une plasticité excéptionnelle,ainsi que des performances accrues du point de vue de la résistance au feu,de l'isolation acoustique et thérmique,ainsi qu'une meilleure pérméabilité à l'air,en ce que aussi,les granulés d'argile et les granules de liège non-torréfiés,forment la granulométrie necéssaire à ces bétons,tout en apportant leurs qualités intrinsèques de matériaux isolants acoustiques et thérmiques.

2. En ce que les bétons légers dont l'objet la présente invention,par la combianison entre les 2 liants et les 2 agrégats de base,tant quantitative que qualitative (qualité des ciments Portland et l'âge de la chaux-vive éteinte) sont des bétons légers multifonctionnels de manière simultanée (résistance en comprésion,isolation acoustique et thérmique protéction au feu,parasismiques,bio-construction) ainsi, qu'ils sont multi-usages par l'étendue du nombre des applications et utilisations possibles pour réaliser pratiquement tous les éléments formant le gros-oeuvre des bâtiments courante

3. Bétons légers définis par la presente invention,qui par leur caractéristique simultannée de multi-fonctionnalité et multi-usages, permettent la conception d'un système de construction intégré et unitaire des bâtiments,incluant la totalité des éléments porteurs et non porteurs de ceux-ci.

4. Bétons légers dont l'objet la présente invention qui par le caractère multi-usage conféré par la synergie crée par le mélange entre les 4 matériaux de base,permet un ordonancement en 3 classes de produits, à savoir les classes S,M et L, à l'intérieur desquelles,il est possible de diversifier les qualités des bétons légers,tout en conservant la spécificité de chaque classe par rapport aux autres,en ce sens que dans la classe S,c'est la résistance en compression qui a la priorité parmi les autres fonctions,que dans la classe M, la résistance en compression a la même importance que les qualités d'isolation thérmique et acoustique,tandis qu'en classe L, la priorité est donnée aux qualités d'isolation acoustique,thérmique et protéction au feu.

5. Les bétons légers dont l'objet la présente invention pour lesquels,l'ajout de la chaux vive éteinte,en des proportions variables,permet d'obtenir des betons plastiques dans lesquels toute ségrégation des agrégats légers est empeêchée en ce que ceci conduit à l'obtention de bétons légers denses, avec des deformations dues au retrat du béton frais reduites en comparaison avec tout autre béton léger existant à l'heure actuelle sur le marché,de même qu'une grande facilité de de mise en oeuvre.

6. En ce que aussi,les bétons légers dont l'objet la présente invention,étant constitués par 2 liants et 2 agrégats naturels et exempts de toute toxicité,sont certifiables pour la bio-construction.

7. En ce que aussi,le fait de pouvoir réaliser pratiquement la totalité des éléments porteurs,non-porteurs et/ou isolants y compris la protéction au feu,confère au gros-oeuvre des bâtiment exécutés avec les bétons légers dont l'objet la présente invention,une homogeneité exceptionnelle.

8. En ce que aussi,les bétons légers dont l'objet la présente invention peuvent être cloués,vissés,sciés et boulonnés.

9. En ce que aussi,la plasticité élévéee des bétons légers dont l'objet la présente invention,permet la création,outre les éléments formant le gros-oeuvre d'un bâtiment,de pièces rélévant du béton architectonique,par moulage et utilisation du ciment Portland blanc,en ce que aussi ces bétons légers peuvent être coloriés dans la masse.

10. En ce que aussi,il est possible de remplacer dans les bétons légers dont objet la presente invention,la chaux éteinte en pâte (non-deshydratée) par de la chaux hydratée en poudre,avec dans ce cas, la perte du bénéfice d'avoir dans le mélange obtenu, le IIème liant qui est donné par la chaux non deshydratée.

11. En ce que aussi,aux 4 composants de base des bétons légers dont l'objet de la presente invention,on peux ajouter,suivant le cas et/ou nécessités,d'autres aggregats légers comme par exemple,la vermiculite,la sciure de bois,les granulés de polystyrène et autres,ainsi que des adjuvants tels que la fumée de silice,les accelerateurs ou retardateurs de prise des bétons et ou des adjuvants hydrofuges.

12. En ce que les caractéristiques mécaniques et physiques des bétons légers dont l'objet la presente invention,rend possible la conception,le calcul et l'exécution des structures mixtes acier-béton léger,telles que dalles et planchers ainsi que des colonnes mixtes acier-béton léger, ceci ayant une grande importance dans tous les cas ou le poids propre des structures (renovation des bâtiments) doit être reduit au maximum.
